# EUROPEAN PATENT APPLICATION

(11) **EP 4 723 593 A1**
(43) Date of publication of application: **08.04.2026**
(21) Application number: 25205468.9
(22) Date of filing: 29.09.2025
(51) Int. Cl.: H04L 65/1016, H04W 48/18

(54) **SYSTEMS AND METHODS FOR REMOVING NETWORKS FROM A DISABLED LIST UPON IMS SERVICE AVAILABILITY**

(30) Priority: 01.10.2024 IN 202421074317; 05.09.2025 US 202519321136
(71) Applicant: MEDIATEK INC., Hsinchu City 30078 (TW)
(72) Inventor: Puneet, Bengaluru (IN); NIEMI, Marko, Oulu (FI)
(74) Representative: Haseltine Lake Kempner LLP

(57) **Abstract**

A system and method for managing network availability for Internet Protocol Multimedia Subsystem (IMS) services are disclosed herein. In one embodiment, the system and method are configured to maintain a plurality of networks indicated as unavailable for an IMS service, and delete a network from the plurality upon identifying that it becomes available for the IMS service. The method includes monitoring for network availability changes and updating network selection priorities accordingly. The system comprises a wireless communication device with a transceiver for communicating with wireless communication nodes and a processor for executing the network management operations.

## Description

### REFERENCE TO RELATED APPLICATION

The application claims priority to and the benefit of Indian Application Number 202421074317, filed October 1, 2024, which is incorporated herein by reference in its entirety for all purposes.

### BACKGROUND

Wireless communication networks have become an integral part of modern society, enabling users to access a wide range of services and applications through mobile devices. As these networks have evolved, the demand for enhanced voice and multimedia services has grown significantly. To meet this demand, mobile network operators have implemented Internet Protocol Multimedia Subsystem (IMS) technology, which provides a standardized framework for delivering IP-based multimedia services.

IMS allows for the seamless integration of voice, video, messaging, and other multimedia services over IP networks. This technology enables operators to offer advanced communication features and improve the overall user experience. However, the availability of IMS services can vary across different networks and geographical areas, presenting challenges for mobile devices as they move between coverage areas.

Mobile devices are designed to operate across multiple networks and radio access technologies (RATs) to ensure continuous connectivity. These devices maintain lists of available networks and their capabilities to facilitate efficient network selection and service access. When a device encounters a network where certain services are unavailable, it may need to adjust its behavior accordingly to maintain optimal performance and user experience.

The management of network lists and service availability information is a complex task for mobile devices. As users move between different coverage areas, their devices must quickly adapt to changing network conditions and service availability. This process involves continuous monitoring, updating, and decision-making based on various factors, including network signal strength, quality of service, and the availability of specific features like IMS voice services.

Efficient handling of network information and service availability is particularly important for ensuring seamless voice communications. Users expect their mobile devices to provide reliable voice calling capabilities regardless of their location or the specific network they are connected to. Meeting this expectation requires sophisticated mechanisms for managing network selection and service accessibility.

As wireless communication technologies continue to advance, including the deployment of 5G and future 6G networks, the complexity of managing network information and service availability is likely to increase. These new technologies promise enhanced capabilities and services, but also introduce additional variables that mobile devices must consider when making network selection and service access decisions.

### SUMMARY

The example embodiments disclosed herein are directed to solving the issues relating to one or more of the problems presented in the prior art, as well as providing additional features that will become readily apparent by reference to the following detailed description when taken in conjunction with the accompany drawings. In accordance with various embodiments, example systems, methods, devices and computer program products are disclosed herein. It is understood, however, that these embodiments are presented by way of example and are not limiting, and it will be apparent to those of ordinary skill in the art who read the present disclosure that various modifications to the disclosed embodiments can be made while remaining within the scope of this disclosure.

In one embodiment, a wireless communication method includes maintaining, by a wireless communication device, a plurality of networks, each of the plurality of networks being indicated as unavailable for an Internet Protocol Multimedia Subsystem (IMS) service, and upon identifying that one of the plurality of networks becomes available for the IMS service, deleting, by the wireless communication device, the one network.

In another embodiment, an apparatus includes a transceiver configured to wirelessly communicate with one or more wireless communication nodes, and a processor coupled to the transceiver and configured to perform operations. The operations include maintaining a plurality of networks, each of the plurality of networks being indicated as unavailable for an Internet Protocol Multimedia Subsystem (IMS) service, and upon identifying that one of the plurality of networks becomes available for the IMS service, deleting the one network.

The above and other aspects and their implementations are described in greater detail in the drawings, the descriptions, and the claims.

### BRIEF DESCRIPTION OF FIGURES

Various example embodiments of the present solution are described in detail below with reference to the following figures or drawings. The drawings are provided for purposes of illustration only and merely depict example embodiments of the present solution to facilitate the reader's understanding of the present solution. Therefore, the drawings should not be considered limiting of the breadth, scope, or applicability of the present solution. It should be noted that for clarity and ease of illustration, these drawings are not necessarily drawn to scale.
Figure 1 illustrates an example cellular communication network in which techniques and other aspects disclosed herein may be implemented, in accordance with an embodiment of the present disclosure.
Figure 2 illustrates block diagrams of an example base station and a user equipment device, in accordance with some embodiments of the present disclosure.
Figure 3 illustrates a flowchart of a method for managing networks unavailable for IMS service by a wireless communication device.

### DETAILED DESCRIPTION

Various example embodiments of the present solution are described below with reference to the accompanying figures to enable a person of ordinary skill in the art to make and use the present solution. As would be apparent to those of ordinary skill in the art, after reading the present disclosure, various changes or modifications to the examples described herein can be made without departing from the scope of the present solution. Thus, the present solution is not limited to the example embodiments and applications described and illustrated herein. Additionally, the specific order or hierarchy of steps in the methods disclosed herein are merely example approaches. Based upon design preferences, the specific order or hierarchy of steps of the disclosed methods or processes can be re-arranged while remaining within the scope of the present solution. Thus, those of ordinary skill in the art will understand that the methods and techniques disclosed herein present various steps or acts in a sample order, and the present solution is not limited to the specific order or hierarchy presented unless expressly stated otherwise.

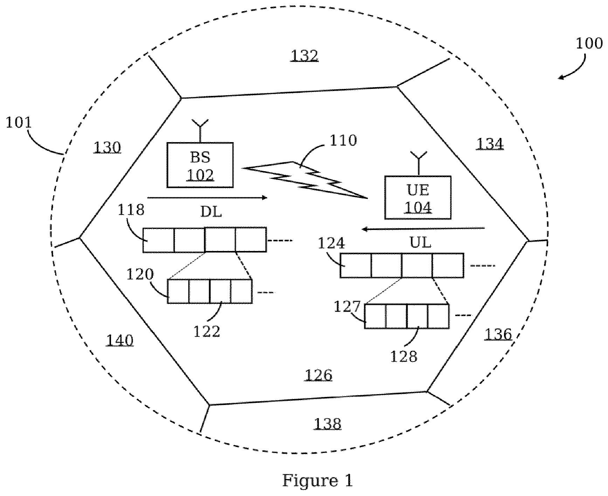

Figure 1 illustrates an example wireless communication network, and/or system, 100 in which techniques disclosed herein may be implemented, in accordance with an embodiment of the present disclosure. In the following discussion, the wireless communication network 100 may be any wireless network, such as a cellular network or a narrowband Internet of things (NB-IoT) network, and is herein referred to as "network 100." Such an example network 100 includes a base station 102 (hereinafter "BS 102") and a user equipment device 104 (hereinafter "UE 104") that can communicate with each other via a communication link 110 (e.g., a wireless communication channel), and a cluster of cells 126, 130, 132, 134, 136, 138 and 140 overlaying a geographical area 101. In Figure 1, the BS 102 and UE 104 are contained within a respective geographic boundary of cell 126. Each of the other cells 130, 132, 134, 136, 138 and 140 may include at least one base station operating at its allocated bandwidth to provide adequate radio coverage to its intended users.

For example, the BS 102 may operate at an allocated channel transmission bandwidth to provide adequate coverage to the UE 104. The BS 102 and the UE 104 may communicate via a downlink radio frame 118, and an uplink radio frame 124 respectively. Each radio frame 118/124 may be further divided into sub-frames 120/127 which may include data symbols 122/128. In the present disclosure, the BS 102 and UE 104 are described herein as non-limiting examples of "communication nodes," generally, which can practice the methods disclosed herein. Such communication nodes may be capable of wireless and/or wired communications, in accordance with various embodiments of the present solution.

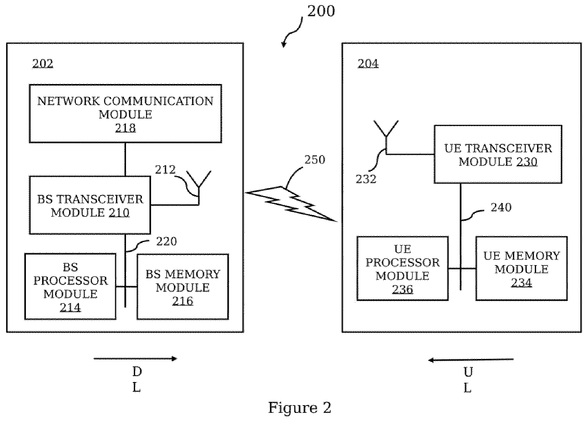

Figure 2 illustrates a block diagram of an example wireless communication system 200 for transmitting and receiving wireless communication signals, e.g., OFDM/OFDMA signals, in accordance with some embodiments of the present solution. The system 200 may include components and elements configured to support known or conventional operating features that need not be described in detail herein. In one illustrative embodiment, system 200 can be used to communicate (e.g., transmit and receive) data symbols in a wireless communication environment such as the wireless communication environment 100 of Figure 1, as described above.

System 200 generally includes a base station 202 (hereinafter "BS 202") and a user equipment device 204 (hereinafter "UE 204"). The BS 202 includes a BS (base station) transceiver module 210, a BS antenna 212, a BS processor module 214, a BS memory module 216, and a network communication module 218, each module being coupled and interconnected with one another as necessary via a data communication bus 220. The UE 204 includes a UE (user equipment) transceiver module 230, a UE antenna 232, a UE memory module 234, and a UE processor module 236, each module being coupled and interconnected with one another as necessary via a data communication bus 240. The BS 202 communicates with the UE 204 via a communication channel 250, which can be any wireless channel or other medium suitable for transmission of data as described herein.

As would be understood by persons of ordinary skill in the art, system 200 may further include any number of modules other than the modules shown in Figure 2. Those skilled in the art will understand that the various illustrative blocks, modules, circuits, and processing logic described in connection with the embodiments disclosed herein may be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionality. Whether such functionality is implemented as hardware, firmware, or software can depend upon the particular application and design constraints imposed on the overall system. Those familiar with the concepts described herein may implement such functionality in a suitable manner for each particular application, but such implementation decisions should not be interpreted as limiting the scope of the present disclosure.

In accordance with some embodiments, the UE transceiver 230 may be referred to herein as an "uplink" transceiver 230 that includes a radio frequency (RF) transmitter and a RF receiver each comprising circuitry that is coupled to the antenna 232. A duplex switch (not shown) may alternatively couple the uplink transmitter or receiver to the uplink antenna in time duplex fashion. Similarly, in accordance with some embodiments, the BS transceiver 210 may be referred to herein as a "downlink" transceiver 210 that includes a RF transmitter and a RF receiver each comprising circuity that is coupled to the antenna 212. A downlink duplex switch may alternatively couple the downlink transmitter or receiver to the downlink antenna 212 in time duplex fashion. The operations of the two transceiver modules 210 and 230 can be coordinated in time such that the uplink receiver circuitry is coupled to the uplink antenna 232 for reception of transmissions over the wireless transmission link 250 at the same time that the downlink transmitter is coupled to the downlink antenna 212. In some embodiments, there is close time synchronization with a minimal guard time between changes in duplex direction.

The UE transceiver 230 and the base station transceiver 210 are configured to communicate via the wireless data communication link 250, and cooperate with a suitably configured RF antenna arrangement 212/232 that can support a particular wireless communication protocol and modulation scheme. In some illustrative embodiments, the UE transceiver 210 and the base station transceiver 210 are configured to support industry standards such as the Long Term Evolution (LTE) and emerging 5G standards, and the like. It is understood, however, that the present disclosure is not necessarily limited in application to a particular standard and associated protocols. Rather, the UE transceiver 230 and the base station transceiver 210 may be configured to support alternate, or additional, wireless data communication protocols, including future standards or variations thereof.

In accordance with various embodiments, the BS 202 may be an evolved node B (eNB), a serving eNB, a target eNB, a femto station, or a pico station, for example. In some embodiments, the UE 204 may be embodied in various types of user devices such as a mobile phone, a smart phone, a personal digital assistant (PDA), tablet, laptop computer, wearable computing device, etc. The processor modules 214 and 236 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, the steps of a method or algorithm described in connection with the embodiments disclosed herein may be embodied directly in hardware, in firmware, in a software module executed by processor modules 214 and 236, respectively, or in any practical combination thereof. The memory modules 216 and 234 may be realized as RAM memory, flash memory, ROM memory, EPROM memory, EEPROM memory, registers, a hard disk, a removable disk, a CD-ROM, or any other form of storage medium known in the art. In this regard, memory modules 216 and 234 may be coupled to the processor modules 210 and 230, respectively, such that the processors modules 210 and 230 can read information from, and write information to, memory modules 216 and 234, respectively. The memory modules 216 and 234 may also be integrated into their respective processor modules 210 and 230. In some embodiments, the memory modules 216 and 234 may each include a cache memory for storing temporary variables or other intermediate information during execution of instructions to be executed by processor modules 210 and 230, respectively. Memory modules 216 and 234 may also each include non-volatile memory for storing instructions to be executed by the processor modules 210 and 230, respectively.

The network communication module 218 generally represents the hardware, software, firmware, processing logic, and/or other components of the base station 202 that enable bidirectional communication between base station transceiver 210 and other network components and communication nodes configured to communication with the base station 202. For example, network communication module 218 may be configured to support internet or WiMAX traffic. In a typical deployment, without limitation, network communication module 218 provides an 802.3 Ethernet interface such that base station transceiver 210 can communicate with a conventional Ethernet based computer network. In this manner, the network communication module 218 may include a physical interface for connection to the computer network (e.g., Mobile Switching Center (MSC)). The terms "configured for," "configured to" and conjugations thereof, as used herein with respect to a specified operation or function, refer to a device, component, circuit, structure, machine, signal, etc., that is physically constructed, programmed, formatted and/or arranged to perform the specified operation or function.

The present disclosure relates to wireless communication systems and methods for managing network availability for Internet Protocol Multimedia Subsystem (IMS) services. In particular, the disclosed techniques address the handling of networks that have been previously identified as unavailable for IMS services, such as voice calls, in various radio access technologies including Evolved Packet System (EPS), 5th Generation Core (5GC) systems, and 6th Generation Core (6GC) systems.

Wireless communication networks, such as those illustrated in FIG. 1, may include multiple cells providing coverage over a geographical area. These networks facilitate communication between base stations and user equipment devices, enabling various services including voice and data transmission. As wireless technologies evolve, the management of network resources and services becomes increasingly complex, particularly in the context of IMS services across different generations of cellular networks.

The present disclosure describes an apparatus that may be used in such wireless communication environments. This apparatus (e.g., UE 104) may comprise a transceiver configured to wirelessly communicate with one or more wireless communication nodes (e.g., BS 102). The transceiver enables the apparatus to exchange signals and data with other devices in the network, such as base stations or other user equipment.

Additionally, the apparatus may include a processor coupled to the transceiver. This processor may be configured to perform various operations related to network management and IMS service availability. The combination of the transceiver and processor allows the apparatus to actively participate in the wireless network while implementing intelligent decision-making processes regarding network selection and service availability.

In the context of IMS services, particularly voice services, the apparatus may maintain information about networks that have been previously identified as unavailable for such services. This information may be crucial for efficient network selection and utilization of IMS services across different radio access technologies.

The wireless communication network 100 may include multiple networks, each associated with different Radio Access Technologies (RATs). In some cases, a user equipment 204 may maintain information about a plurality of networks that are indicated as unavailable for Internet Protocol Multimedia Subsystem (IMS) services. This information may be stored in the user equipment memory module 234 and managed by the user equipment processor module 236.

The plurality of networks maintained by the user equipment 204 may each include a Public Land Mobile Network (PLMN). In some cases, each of the maintained networks is associated with a respective Radio Access Technology (RAT). These RATs may include, but are not limited to, Evolved Packet System (EPS), 5th Generation Core (5GC) systems, and 6th Generation Core (6GC) systems.

The user equipment 204 may consider a network unavailable for IMS voice service based on specific conditions. These conditions may include lack of support for IMS voice by the user equipment 204 itself, or a network indication of non-support for IMS voice over Packet Switched (PS) sessions. In some cases, the user equipment 204 may also determine unavailability if the upper layers do not provide an indication that the user equipment 204 is available for voice calls in the IMS within a predetermined period of time.

When maintaining the list of unavailable networks, the user equipment 204 may associate a timer with each network in the list. For networks where the Evolved Universal Terrestrial Radio Access (E-UTRA) capability was disabled, a timer TD may be used. Similarly, for networks where the New Radio (NR) capability was disabled in N1 mode, a timer TF may be used. These timers may be implemented using the user equipment processor module 236 and may help in managing the duration for which a network is considered unavailable.

In some cases, the user equipment 204 may use automatic PLMN selection to avoid considering unavailable networks as selection candidates. This process may involve the user equipment processor module 236 analyzing the list of unavailable networks stored in the user equipment memory module 234 before making PLMN selection decisions. By doing so, the user equipment 204 may optimize its network selection process, avoiding attempts to connect to networks that are known to be unavailable for IMS services.

The management of this list of unavailable networks may involve various operations performed by the user equipment processor module 236. These operations may include adding networks to the list when they are determined to be unavailable, removing networks from the list when they become available or when the associated timer expires, and updating the status of networks based on new information received through the communication channel 250.

In some cases, the user equipment 204 may periodically reassess the availability of networks in the list. This reassessment may involve attempting to establish a connection with the networks or receiving updated information about their IMS service availability through the base station 202 via the communication channel 250. This dynamic management of network availability information allows the user equipment 204 to adapt to changes in network conditions and maintain an up-to-date list of networks available for IMS services.

In the wireless communication network 100, a user equipment may employ various methods to detect when a network becomes available for Internet Protocol Multimedia Subsystem (IMS) services. The user equipment processor module 236 may be configured to perform these detection operations, utilizing information stored in the user equipment memory module 234 and communicating with other network elements via the communication channel 250.

The IMS service may include an IMS voice service. In some cases, the user equipment may be specifically configured to detect the availability of IMS voice services within a particular network. This detection process may involve analyzing network capabilities, evaluating signal quality, and assessing the readiness of the network to support voice calls over the IMS infrastructure.

One method for identifying network availability for IMS services may involve receiving a message from a higher layer. The user equipment processor module 236 may be configured to receive and process such messages. These higher layer messages may originate from various components within the user equipment or from external network entities transmitted through the base station 202 via the communication channel 250.

In some cases, the higher layer message may contain explicit information about the availability of IMS services in a specific network. This information may be in the form of a flag, a status indicator, or a more detailed set of parameters describing the network's IMS capabilities. The user equipment processor module 236 may interpret this message and update the status of the network in the user equipment memory module 234 accordingly.

The process of receiving and interpreting these higher layer messages may be part of a broader network monitoring strategy implemented by the user equipment. The user equipment processor module 236 may continuously or periodically check for such messages, ensuring that the user equipment maintains an up-to-date understanding of IMS service availability across various networks within the geographical area 101.

Upon receiving a message indicating that a previously unavailable network has become available for IMS services, the user equipment processor module 236 may initiate a series of actions. These actions may include updating the list of available networks stored in the user equipment memory module 234, re-evaluating network selection priorities, and potentially triggering a network reselection procedure if the newly available network offers superior service quality or coverage.

The ability to quickly and accurately detect changes in IMS service availability allows the user equipment to optimize its network selection and utilization. This may lead to improved call quality, reduced latency in establishing IMS-based communications, and a more seamless user experience when transitioning between different networks within the wireless communication network 100.

In the wireless communication network 100, a user equipment may maintain a list of networks that are unavailable for Internet Protocol Multimedia Subsystem (IMS) services. This list may be stored in the user equipment memory module 234 and managed by the user equipment processor module 236. The process of deleting a network from this maintained list when it becomes available for IMS service is a crucial aspect of network management.

When a network that was previously unavailable for IMS service becomes available, the user equipment processor module 236 may initiate the deletion process. This process may involve several steps and can vary depending on the specific circumstances.

In some cases, the deletion process may be triggered by receiving a message from a higher layer indicating that IMS service has become available on a particular network. Upon receiving such a message, the user equipment processor module 236 may locate the corresponding network entry in the list stored in the user equipment memory module 234 and remove it.

The user equipment may also delete stored information on unavailable networks under various other conditions. For example, when the user equipment is switched off, the user equipment processor module 236 may be configured to clear the entire list of unavailable networks from the user equipment memory module 234. This ensures that the user equipment starts with a clean slate when it is powered on again, allowing it to reassess network availability without being influenced by potentially outdated information.

Similarly, when a Universal Subscriber Identity Module (USIM) is removed from the user equipment, the user equipment processor module 236 may delete the stored information on unavailable networks. This action recognizes that network availability may change with a different USIM, and therefore, the previous list may no longer be relevant.

In some cases, the deletion of stored information on unavailable networks may occur when the user equipment's usage setting changes. For instance, if the user equipment switches from a "voice centric" to a "data centric" mode, the user equipment processor module 236 may reevaluate the relevance of the stored network information and potentially delete entries that are no longer applicable to the new usage setting.

The user equipment may also implement a timer-based approach for managing the list of unavailable networks. Each network entry in the list may be associated with a timer, such as timer TD for networks where Evolved Universal Terrestrial Radio Access (E-UTRA) capability was disabled, or timer TF for networks where New Radio (NR) capability was disabled in N1 mode. When these timers expire, the user equipment processor module 236 may automatically delete the corresponding network entries from the list stored in the user equipment memory module 234.

The process of deleting a network when it becomes available for IMS service may involve additional steps beyond simply removing the entry from the list. The user equipment processor module 236 may update other related data structures, recalculate network selection priorities, or trigger a network reselection procedure if appropriate.

In some implementations, the deletion process may include a verification step. Before removing a network from the list, the user equipment processor module 236 may attempt to establish a connection with the network via the communication channel 250 to confirm its availability for IMS service. This additional check helps ensure the accuracy of the network availability information.

The specific implementation of the network deletion process may vary depending on the design of the user equipment and the requirements of the wireless communication network 100. However, the fundamental goal remains consistent: to maintain an up-to-date and accurate list of networks available for IMS services, thereby optimizing the user equipment's ability to connect and utilize these services effectively.

In the wireless communication network 100, a user equipment may interact with various network elements to manage and utilize Internet Protocol Multimedia Subsystem (IMS) services across different Radio Access Technologies (RATs). The user equipment memory module 234 and the user equipment processor module 236 work in concert to maintain and process information about network availability for IMS services.

The user equipment processor module 236 may be configured to maintain a list of networks in the user equipment memory module 234, where each network in the list is indicated as unavailable for IMS services. This list may include networks associated with various RATs, such as Evolved Packet System (EPS), 5th Generation Core (5GC) system, and 6th Generation Core (6GC) system.

In some cases, the user equipment processor module 236 may receive information about network availability through the communication channel 250. This information may be transmitted from the base station 202 and received by the user equipment via the communication link 110. The user equipment processor module 236 may then process this information to update the list of unavailable networks stored in the user equipment memory module 234.

The user equipment processor module 236 may also be responsible for identifying when a network becomes available for IMS services. This identification process may involve analyzing messages received from higher layers of the network protocol stack. When the user equipment processor module 236 determines that a previously unavailable network has become available for IMS services, the processor may initiate a deletion process to remove that network from the list of unavailable networks stored in the user equipment memory module 234.

In some cases, the user equipment processor module 236 may manage separate lists for different RATs. For example, the processor may maintain one list for networks using the Evolved Packet System (EPS), another for networks using the 5th Generation Core (5GC) system, and a third for networks using the 6th Generation Core (6GC) system. This separation allows the user equipment to efficiently manage network availability information across different generations of cellular technology.

The user equipment processor module 236 may also be responsible for initiating network selection procedures based on the availability information stored in the user equipment memory module 234. When a network becomes available for IMS services, the processor may trigger a reassessment of network selection priorities, potentially leading to a switch to the newly available network if it offers superior service quality or coverage within the geographical area 101.

The interaction between the user equipment memory module 234 and the user equipment processor module 236 enables the user equipment to maintain an up-to-date understanding of network availability for IMS services. This interaction facilitates efficient network selection and utilization, potentially improving the user's experience when using IMS services such as voice calls across different RATs in the wireless communication network 100.

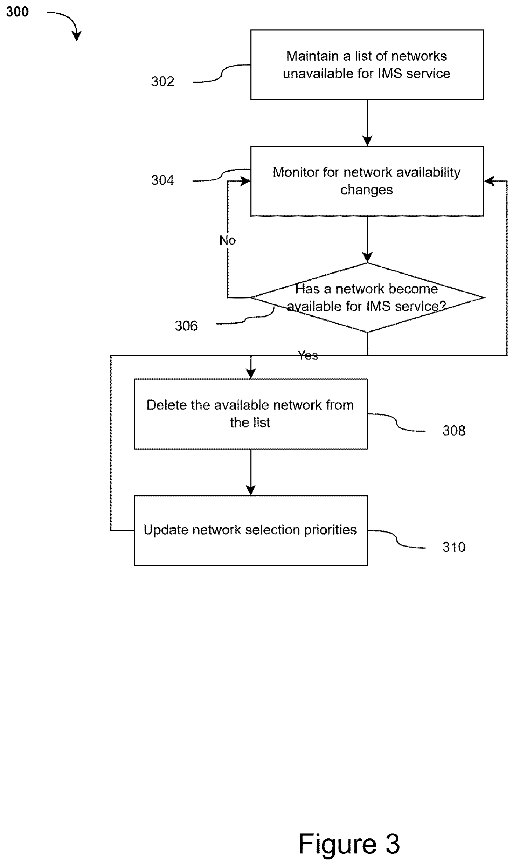

The user equipment 204 may perform a method 300 for managing networks unavailable for Internet Protocol Multimedia Subsystem (IMS) service, as illustrated in Figure 3. This method 300 may be implemented by the user equipment processor module 236 in conjunction with the user equipment memory module 234 and the user equipment transceiver module 230.

In step 302, the user equipment 204 may maintain a list of networks that are unavailable for IMS service. This list may be stored in the user equipment memory module 234 and may include information about various Public Land Mobile Networks (PLMNs) associated with different Radio Access Technologies (RATs) such as Evolved Packet System (EPS), 5th Generation Core (5GC) system, and 6th Generation Core (6GC) system.

In step 304, the user equipment 204 may continuously monitor for network availability changes. This monitoring process may involve the user equipment transceiver module 230 receiving signals from various networks within the geographical area 101. The user equipment processor module 236 may analyze these signals and any associated network information to detect changes in IMS service availability.

At decision point 306, the user equipment 204 may check if a network has become available for IMS service. This check may be based on various factors, including receiving higher layer messages indicating IMS service availability, successful registration with a network's IMS, or expiration of timers associated with network unavailability.

If a network becomes available for IMS service (Yes branch from decision point 306), the user equipment 204 may proceed to step 308. In this step, the user equipment processor module 236 may delete the newly available network from the list of unavailable networks stored in the user equipment memory module 234. This deletion process may involve removing the network entry from the list, updating associated data structures, and potentially verifying the network's IMS service availability through a test connection.

Following the deletion of the network from the unavailable list, in step 308, the user equipment 204 may update its network selection priorities. The user equipment processor module 236 may reassess the available networks based on factors such as signal strength, quality of service, and the newly available IMS services. This update may result in the user equipment 204 selecting a different network for communication if the newly available network offers superior service or coverage within the geographical area 101.

If no network becomes available for IMS service (No branch from decision point 306), the user equipment 204 may return to step 304 to continue monitoring for network availability changes. This creates a continuous loop, ensuring that the user equipment 204 maintains an up-to-date list of networks unavailable for IMS service and responds promptly to any changes in network availability.

The method illustrated in Figure 3 may allow the user equipment 204 to efficiently manage its list of networks unavailable for IMS service, quickly adapt to changes in network availability, and optimize its network selection for improved IMS service utilization. This process may contribute to enhanced user experience by facilitating seamless access to IMS services across various networks and RATs within the wireless communication network 100.

While various embodiments of the present solution have been described above, it should be understood that they have been presented by way of example only, and not by way of limitation. Likewise, the various diagrams may depict an example architectural or configuration, which are provided to enable persons of ordinary skill in the art to understand example features and functions of the present solution. Such persons would understand, however, that the solution is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described illustrative embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques. To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present solution.

Additionally, memory or other storage, as well as communication components, may be employed in embodiments of the present solution. It will be appreciated that, for clarity purposes, the above description has described embodiments of the present solution with reference to different functional units and processors. However, it will be apparent that any suitable distribution of functionality between different functional units, processing logic elements or domains may be used without detracting from the present solution. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

Various embodiments are set out in the following numbered clauses:
Clause 1. A wireless communication method, comprising: maintaining, by a wireless communication device, a plurality of networks, each of the plurality of networks being indicated as unavailable for an Internet Protocol Multimedia Subsystem (IMS) service; and upon identifying that one of the plurality of networks becomes available for the IMS service, deleting, by the wireless communication device, the one network.
Clause 2. The wireless communication method of Clause 1, wherein the plurality of networks each include a Public Land Mobile Network (PLMN).
Clause 3. The wireless communication method of Clause 1, wherein the IMS service includes an IMS voice service.
Clause 4. The wireless communication method of Clause 1, further comprising: receiving, by the wireless communication device, a message from a higher layer to identify that the one network has become available.
Clause 5. The wireless communication method of Clause 1, wherein each of the maintained networks is associated with a respective Radio Access Technology (RAT).
Clause 6. The wireless communication method of Clause 5, wherein the RAT includes an Evolved Packet System (EPS).
Clause 7. The wireless communication method of Clause 5, wherein the RAT includes a 5^{th} Generation Core (5GC) system.
Clause 8. The wireless communication method of Clause 5, wherein the RAT includes a 6^{th} Generation Core (6GC) system.
Clause 9. An apparatus, comprising: a transceiver configured to wirelessly communicate with one or more wireless communication nodes; and a processor coupled to the transceiver and configured to operations comprising: maintaining a plurality of networks, each of the plurality of networks being indicated as unavailable for an Internet Protocol Multimedia Subsystem (IMS) service; and upon identifying that one of the plurality of networks becomes available for the IMS service, deleting the one network.
Clause 10. The apparatus of Clause 9, wherein the plurality of networks each include a Public Land Mobile Network (PLMN).
Clause 11. The apparatus of Clause 9, wherein the IMS service includes an IMS voice service.
Clause 12. The apparatus of Clause 9, wherein the operations further comprise: receiving a message from a higher layer to identify that the one network has become available.
Clause 13. The apparatus of Clause 9, wherein each of the maintained networks is associated with a respective Radio Access Technology (RAT).
Clause 14. The apparatus of Clause 13, wherein the RAT includes an Evolved Packet System (EPS).
Clause 15. The apparatus of Clause 13, wherein the RAT includes a 5^{th} Generation Core (5GC) system.
Clause 16. The apparatus of Clause 13, wherein the RAT includes a 6^{th} Generation Core (6GC) system.

## Claims

1. A wireless communication method, comprising:
maintaining (302), by a wireless communication device (204), a plurality of networks, each of the plurality of networks being indicated as unavailable for an Internet Protocol Multimedia Subsystem, IMS, service; and
upon identifying that one of the plurality of networks becomes available for the IMS service, deleting (308), by the wireless communication device (204), the one network.

2. The wireless communication method of claim 1, wherein the plurality of networks each include a Public Land Mobile Network, PLMN, and the IMS service includes an IMS voice service.

3. The wireless communication method of claim 1, further comprising:
receiving (304), by the wireless communication device (204), a message from a higher layer to identify that the one network has become available.

4. The wireless communication method of claim 1, wherein each of the maintained networks is associated with a respective Radio Access Technology, RAT.

5. The wireless communication method of claim 4, wherein the RAT includes at least one of an Evolved Packet System, EPS, a 5^{th} Generation Core (5GC) system, or a 6^{th} Generation Core (6GC) system.

6. An apparatus (204), comprising:
a transceiver (210) configured to wirelessly communicate with one or more wireless communication nodes (202); and
a processor (236) coupled to the transceiver (230) and configured to operations comprising:
maintaining a plurality of networks, each of the plurality of networks being indicated as unavailable for an Internet Protocol Multimedia Subsystem, IMS, service; and
upon identifying that one of the plurality of networks becomes available for the IMS service, deleting the one network.

7. The apparatus (204) of claim 6, wherein the plurality of networks each include a Public Land Mobile Network, PLMN, and the IMS service includes an IMS voice service.

8. The apparatus (204) of claim 6, wherein the operations further comprise:
receiving a message from a higher layer to identify that the one network has become available.

9. The apparatus (204) of claim 6, wherein each of the maintained networks is associated with a respective Radio Access Technology, RAT.

10. The apparatus (204) of claim 9, wherein the RAT includes at least one of an Evolved Packet System, EPS, a 5^{th} Generation Core, 5GC, system, or a 6^{th} Generation Core, 6GC, system.
